# EUROPEAN PATENT APPLICATION

(11) **EP 1 708 485 A1**
(43) Date of publication of application: **04.10.2006**
(21) Application number: 06110484.0
(22) Date of filing: 28.02.2006
(51) Int. Cl.: H04N 5/00, G11B 27/00

(54) **Signal output apparatus and signal output method**

(30) Priority: 31.03.2005 JP 2005101589
(71) Applicant: KABUSHIKI KAISHA TOSHIBA, Tokyo 105-8001 (JP)
(72) Inventor: Ukai, Kaoru Toshiba Corporation, Minato-ku Tokyo 105-8001 (JP); Nakagawa, Masaki Toshiba Corporation, Minato-ku Tokyo 105-8001 (JP)
(74) Representative: Henkel, Feiler & Hänzel

(57) **Abstract**

Information (EDID data) that indicates a reception specification of a connected receiving-side device (13) is acquired from the receiving-side device (13), and signals including images or voices of a form that corresponds to the acquired reception specification are searched and obtained from either one of a mounted information recording medium (12) and a data server (15) on a network (14), and then, the acquired signals are subjected to predetermined signal processing to be outputted to the receiving-side device (13).

## Description

The present invention relates to a signal output apparatus and signal output method which output digital signals, for example, images or voices to externally connected other receivers.

As is commonly known, a digital visual interface (DVI) standard has been in widespread use as a standard to transmit digital video signals. In recent years, as a digital signal transmission standard which has the DVI standard further improved, a high definition multimedia interface (HDMI) standard has begun to be adopted.

This HDMI standard incorporates various rules, for example, that it is possible to multiplex digital audio signals during a blanking period of digital video signals and to carry out audio transmission; that it is possible to transmit digital video signals in a YCbCr signal form or YPbPr signal form which provides higher picture quality than YCbCr in addition to transmitting digital video signals in an RGB signal form; and that connection can be made with a universal serial bus (USB)-like small-size HDMI connector, which are not included in the DVI standard.

In addition, in the HDMI standard, prior to transmission of signals, a device on the transmitting side can output signals in a form that conforms to performance of a device on the receiving side by carrying out certification between the device on the transmitting side and the device on the receiving side. That is, the device on the transmitting side recognizes a reception specification of the device on the receiving side by acquiring extended display identification (EDID) data from the device on the receiving side and outputs signals in a form that conforms to the reception specification.

By the way, in the system of transmitting digital signals that comply with the HDMI standard, the device on the transmitting side applies signal processing to such output signals so as to achieve a form that conforms to the reception specification obtained from the device on the receiving side. Consequently, depending on a reception specification, signal processing may be unable to be carried out in a form conforming the reception specification, and it becomes inconvenient for users to handle.

Jpn. Pat. Appln. KOKAI Publication No. 10-40187 discloses a configuration of an information processing apparatus which selects from multiple items of nondocument data with varying attributes in the same content, data which have attributes that conform to an output destination device, and which transmits the selected nondocument data which have attributes that conform to an output destination device to the output destination device.

The present invention has been made in view of the current circumstances above, and an object of the present invention is to provide a signal output apparatus and signal output method that easily improves the possibility of outputting signals of a form that corresponds to a reception specification of a device on the receiving side to which the signal is outputted and that can be satisfactorily put into practical use.

According to one aspect of the present invention, there is provided a signal output apparatus comprising: a reader unit configured to read signals including images or voices from a mounted information recording medium; a signal acquiring unit configured to acquire signals including images or voices from a data server on a network; a specification acquiring unit configured to acquire information indicating a reception specification of a connected receiving-side device from the receiving-side device; a control unit configured to search and acquire signals including images or voices of a form that corresponds to the reception specification acquired by the specification acquiring unit from either one of the information recording medium and the data server; and an output unit configured to output the receiving-side device by applying predetermined signal processing to signals acquired by the control unit.

According to another aspect of the present invention, there is provided a signal output method comprising: a first step of acquiring information indicating a reception specification of a connected receiving-side device from the receiving-side device; a second step of searching and acquiring signals including images or voices of a form that corresponds to the reception specification acquired in the first step from either one of a mounted information recording medium and a data server on a network; and a third step of applying predetermined signal processing to the signals acquired in the second step and outputting the signals to the receiving-side device.

This summary of the invention does not necessarily describe all necessary features so that the invention may also be a sub-combination of these described features.

The invention can be more fully understood from the following detailed description when taken in conjunction with the accompanying drawings, in which:
FIG. 1 shows one embodiment of the present invention, and is a block configuration diagram for explaining an outline of a digital signal transmission system;
FIG. 2 is a block configuration diagram shown to explain a video signal processing system of an optical disk reproducing apparatus in the same embodiment;
FIG. 3 is a flow chart shown to explain main processing operations of the optical disk reproducing apparatus in the same embodiment;
FIG. 4 is a flow chart shown to explain other processing operations of the optical disk reproducing apparatus in the same embodiment; and
FIG. 5 is a block configuration diagram shown to explain a modified example of the optical disk reproducing apparatus in the same embodiment.

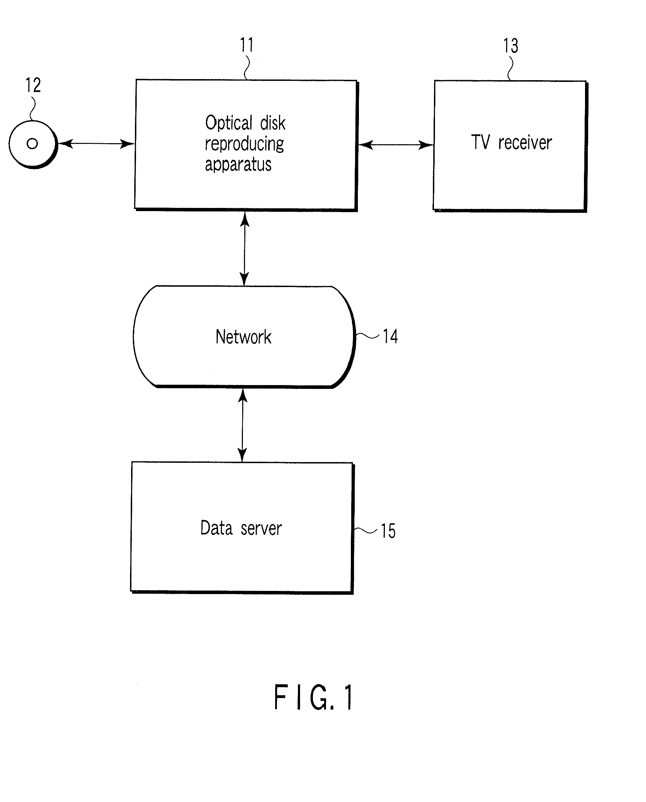

Now, one embodiment of the present invention will be described in detail with reference to the accompanying drawings. FIG. 1 shows an outline of a digital signal transmission system to be explained in this embodiment. In FIG. 1, reference numeral 11 denotes an optical disk reproducing apparatus which serves as an electronic device on the transmitting side.

When an optical disk 12 which is an information recording medium is mounted, the optical disk reproducing apparatus 11 converts video or audio signals, etc. obtained by reproducing the optical disk 12 into a form that conforms to the HDMI standard, and transmits the converted signals to a TV receiver 13 which serves as an electronic device on the receiving side.

In addition, the optical disk 11 can request access to a predetermined data server 15 via a network 14, thereby obtaining video or audio signals, etc. from the data server 15.

The optical disk reproducing apparatus 11 also can convert video or audio signals, etc. obtained from the data server 15 into a form that conforms to the HDMI specifications, and transmit the converted signals to the TV receiver 13.

Further, the TV receiver 13 has a function of receiving TV broadcasting signals and performing image display and voice reproduction, and also has a function of performing image display and voice reproduction with respect to video signals and audio signals supplied from the optical disk reproducing apparatus 11.

In this case, the optical disk reproducing apparatus 11 requests the TV receiver 13 to acquire EDID data prior to outputting video and audio signals, etc. to the TV receiver 13.

The TV receiver 13 stores in advance EDID data that indicates a reception specification such as its own display specification (resolution, etc) and the number of audio channels, and the EDID data is transmitted to the optical disk reproducing apparatus 11 in accordance with the request from the optical disk reproducing apparatus 11.

The optical disk reproducing apparatus 11 recognizes a reception specification of the TV receiver 13 based on the acquired EDID data, searches video and audio signals, etc. of a form that corresponds to the reception specification from the optical disk 12 or the data server 15, and outputs the signals, etc. to the TV receiver 13.

That is, in the optical disk reproducing apparatus 11, signals of a form that corresponds to the reception specification of the TV receiver 13 are searched and acquired from the optical disk 12 or the data server 15.

Consequently, the optical disk reproducing apparatus 11 can easily improve the possibility of outputting signals of a form that corresponds to the reception specification of the TV receiver 13 and can be satisfactorily put into practical use.

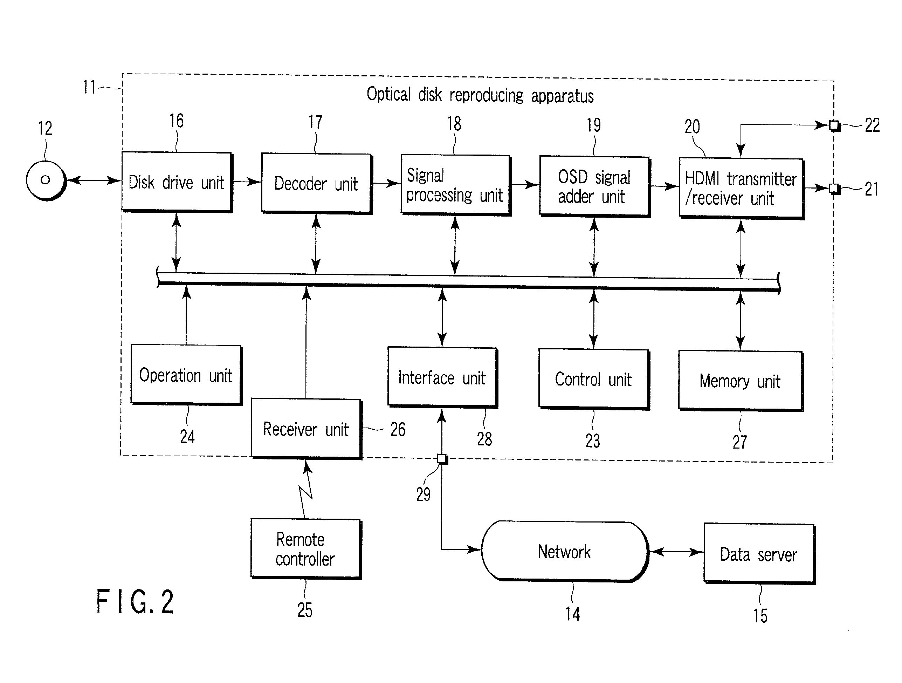

FIG. 2 shows a video signal processing system of the optical disk reproducing apparatus 11. The optical disk reproducing apparatus 11 has the optical disk 12 such as a digital versatile disk (DVD) mounted to a disk drive unit 16, and data recorded in the optical disk 12 is read by a reproduction request made.

The data read by the disk drive unit 16 is subjected to digitization processing, error correction processing, and decoding processing, etc. successively by being supplied to a decoder unit 17 and a signal processing unit 18, and is restored into a digital video signal.

The restored digital video signal is supplied to an on-screen display (OSD) signal adder unit 19, in which an OSD signal is added to the signal. Then, the signal is supplied to an HDMI transmitter/receiver unit 20, converted into a form that conforms to the HDMI standard, and guided to a device on the receiving side (in this case, TV receiver 13) via an output terminal 21.

The HDMI transmitter/receiver unit 20 can request the device on the receiving side (TV receiver 13) to acquire the EDID data via an input/output (I/O) terminal 22. Furthermore, the HDMI transmitter/receiver unit 20 can acquire EDID data outputted from the device on the receiving side (TV receiver 13) via the I/O terminal 22.

Now, all the operations of the optical disk reproducing apparatus 11 including the above-mentioned reproducing operation are integrally controlled by a control unit 23. The control unit 23 has a central processing unit (CPU), etc. therein. The control unit 23 receives operation information from an operation unit 24 or operation information from a receiver unit 26 which receives transmission signals of a remote controller 25, and controls each unit, respectively, in such a manner that the operation content is reflected.

In this case, the control unit 23 utilizes a memory unit 27. The memory unit 27 primarily has a read only memory (ROM) having stored therein a control program executed by the CPU, a random access memory (RAM) which provides the CPU with a working area, and a nonvolatile memory in which information on various settings and control information, and others are stored.

Now, the control unit 23 can request access to the data server 15 connected to the network 14 via an interface unit 28 and a connection terminal 29, thereby acquiring desired video signals from the data server 15.

The video signals acquired from the data server 15 are supplied to the signal processing unit 18 to be subjected to predetermined signal processing, and OSD signals are added to the video signals at the OSD signal adder 19. Then, the video signals are converted into a form that conforms to the HDMI standard by the HDMI transmitter/receiver unit 20, and guided to the device on the receiving side (TV receiver 13) via the output terminal 21.

Now, the control unit 23 recognizes a reception specification of the TV receiver 13 on the basis of the EDID data acquired at the HDMI transmitter/receiver unit 20, searches the video signals of a form that corresponds to the reception specification from the optical disk 12 or data server 15, and outputs the searched signals to the TV receiver 13.

For example, in the case where the display specification of the TV receiver 13 is SD (standard) specification that corresponds to the standard picture quality, the control unit 23 searches SD-compliant video signals from the content of the optical disk 12 or data server 15 and outputs the searched signals to the TV receiver 13.

In addition, in the case where the display specification of the TV receiver 13 is HD (high definition) specification that corresponds to the high picture quality, the control unit 23 searches HD-compliant video signals from the content of the optical disk 12 or data server 15 and outputs the searched signals to the TV receiver 13.

In this case, it is assumed that SD-compliant video signals and HD-compliant video signals are prepared in advance in the optical disk 12 or dada server 15 for the same content which the user requests to view.

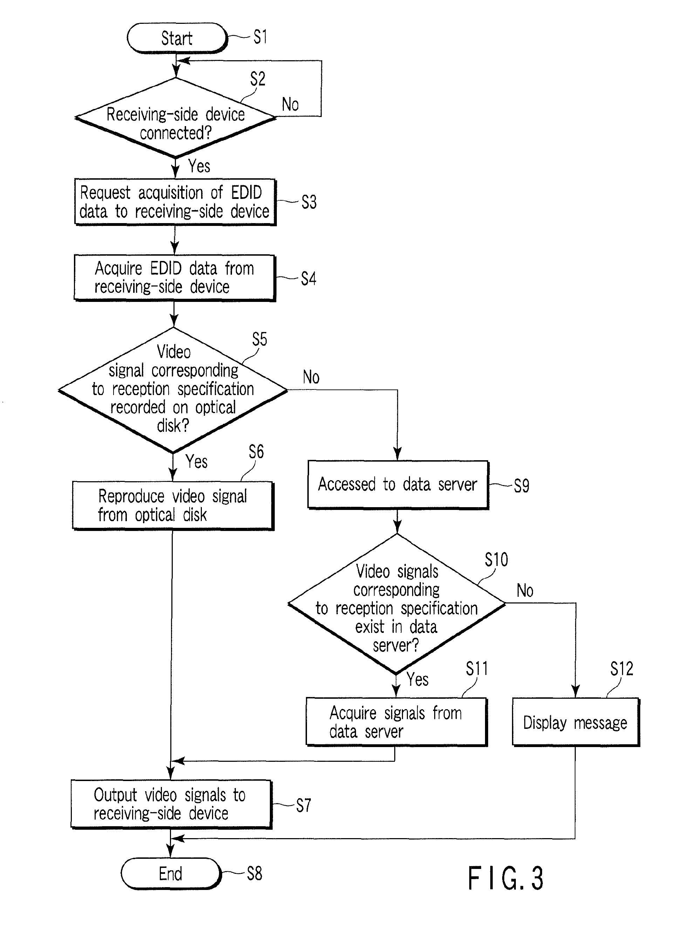

FIG. 3 shows a flow chart that summarizes one example of operations in which the optical disk reproducing apparatus 11 searches and outputs video signals that correspond to the reception specification of the TV receiver 13. First of all, when processing is started (Step S1), the control unit 23 determines in Step S2 whether or not the device on the receiving side (TV receiver 13) is connected.

In the case where it is determined that the TV receiver 13 is connected (YES), the control unit 23 requests the TV receiver 13 to acquire EDID data in Step S3, and acquires EDID data from the TV receiver 13 in Step S4.

Thereafter, in Step S5, the control unit 23 recognizes a reception specification of the TV receiver 13 on the basis of the acquired EDID data and determines whether or not the video signals of a form that corresponds to the reception specification are recorded in the optical disk 12.

In the case where it is determined that the video signals of the form that corresponds to the reception specification of the TV receiver 13 are recorded in the optical disk 12 (YES), the control unit 23 reproduces the video signals of the corresponding form from the optical disk 12 in Step 6, transmits the reproduced video signals to the TV receiver 13 in the form compliant with the HDMI standard in Step S7, and completes processing (Step S8).

Note that in transmitting the video signals to the TV receiver 13 in the above-mentioned step S7, an illegal copy prevention measure of video signals is taken using, for example, a high bandwidth digital content protection (HDCP) technique.

On the other hand, in the case where video signals of a form that corresponds to the reception specification of the TV receiver 13 are not recorded in the optical disk 12 in the above-mentioned step S5 (NO), the control unit 23 accesses the data server 15 via the network 14 in Step S9, and determines whether or not the video signals of a form that corresponds to the reception specification of the TV receiver 13 exist in the data server 15.

In the case where the video signals of a form that corresponds to the reception specification of the TV receiver 13 exist in the data server 15 (YES), the control unit 23 acquires video signals of the corresponding form from the data server 15 in Step S11, and moves processing to that of Step S7.

In addition, in the case where it is determined that no video signal that corresponds to the reception specification of the TV receiver 13 exists in the data server 15 in the above-mentioned step S10 (NO), the control unit 23 displays a message indicating that no video signal of the form that corresponds to the reception specification of the TV receiver 13 exists in either optical disk 12 or data server 15 on the TV receiver 13 by OSD, and processing is terminated (Step S8).

According to the above-mentioned embodiment, video signals of the form that corresponds to the reception specification of the TV receiver 13 are searched from the optical disk 12 or data server 15 and outputted to the TV receiver 13. As a consequence, the possibility of outputting signals of a form that corresponds to the reception specification of the device on the receiving side can be easily improved.

Note that the form of video signals to be outputted to the TV receiver 13 may be arbitrarily set by user operation. For example, the form of video signals to be outputted from the output terminal 21 can be fixed to either the SD specification or HD specification irrespective of the reception specification of the connected TV receiver 13.

In addition, in the case where the TV receiver 13 is of SD specification and there exist video signals of the HD specification only in the optical disk 12 and the database 15, video signals of the HD specification obtained from the optical disk 12 or the database 15 may be down-converted to the SD specification at the signal processor 18 and outputted to the TV receiver 13.

Conversely, in the case where the TV receiver 13 is of HD specification and there exist video signals of SD specification only in the optical disk 12 and the database 15, video signals of the SD specification obtained from the optical disk 12 or the database 15 may be up-converted to the HD specification at the signal processor 18 and outputted to the TV receiver 13.

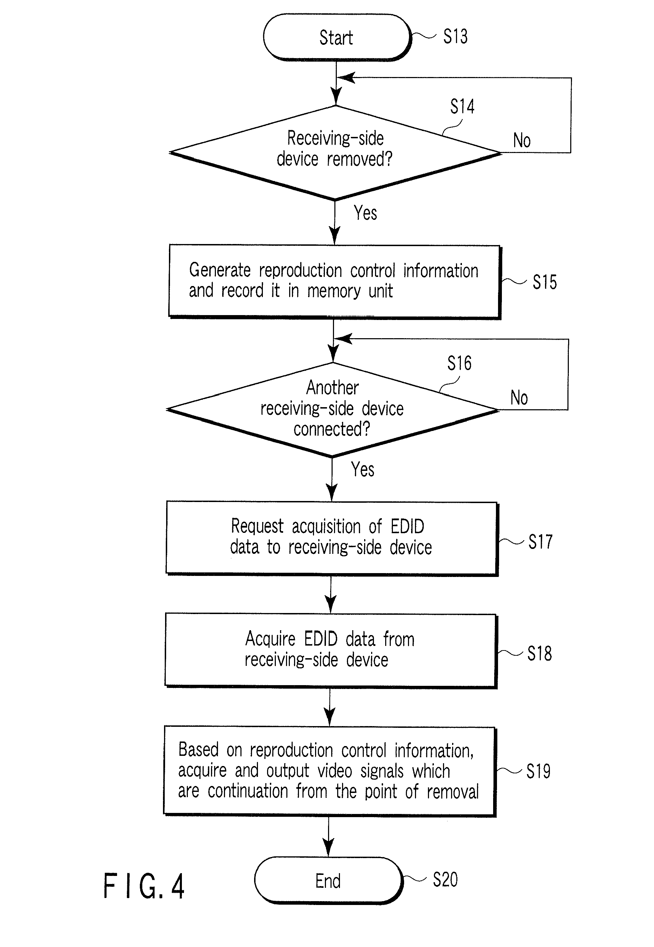

FIG. 4 shows a flow chart that summarizes operations in the case where the TV receiver 13 is removed and a device on the receiving side (TV receiver 13) with another reception specification is connected when the optical disk reproducing apparatus 11 outputs video signals to the device on the receiving side (TV receiver 13).

In this operation, processing starts in a state in which the optical disk reproducing apparatus 11 acquires and outputs video signals of a form that corresponds to the reception specification of a specific TV receiver 13 from the optical disk 12 or data server 15 (Step S13).

Then, the control unit 23 determines whether or not the specific TV receiver 13 is removed in Step S14. In the case where it is determined that the receiver has been removed (YES), the control unit 23 generates various kinds of reproduction control information including the reproduction position for the video signals transmitted right before the specific TV receiver 13 was removed and records the generated information in the memory unit 27 in Step 15.

Thereafter, the control unit 23 determines whether or not another TV receiver 13 is connected. In the case where it is determined that the receiver has been connected (YES), the control unit 23 requests the TV receiver 13 to acquire EDID data in Step S17 and acquires EDID data from the TV receiver 13 in Step S18.

The control unit 23 recognizes a reception specification of the TV receiver 13 based on the EDID data obtained in Step S19, obtains video signals of the form that corresponds to the reception specification from the optical disk 12 or the data server 15, and transmits the obtained signals to TV receiver 13, and processing is terminated (Step S20).

In this case, in the above-mentioned Step S19, the control unit 23 obtains video signals which are continuation of the video signals transmitted right before the specific TV receiver 13 was removed from the optical disk 12 or data server 15 on the basis of the reproduction control information recorded in the memory unit 27, and transmits the obtained signals to the TV receiver 13.

According to this kind of operation, for example, both SD-compliant video signals and HD-compliant video signals are recorded in the same content in the optical disk 12. Even in the case where a TV receiver 13 of SD specification is replaced with a TV receiver 13 of HD specification while SD-compliant video signals are being reproduced by the TV receiver 13 of SD-specification, the continuation from the portion which was viewed on the TV receiver 13 of SD specification can be automatically seen in the TV receiver 13 of HD specification.

Note that, after replacing, the position of video signals which start reproduction of the TV receiver 13 of HD specification can be optionally set. For example, from video signals 10 seconds before when the TV receiver 13 of SD specification, reproduction may be started with the TV receiver 13 of HD specification.

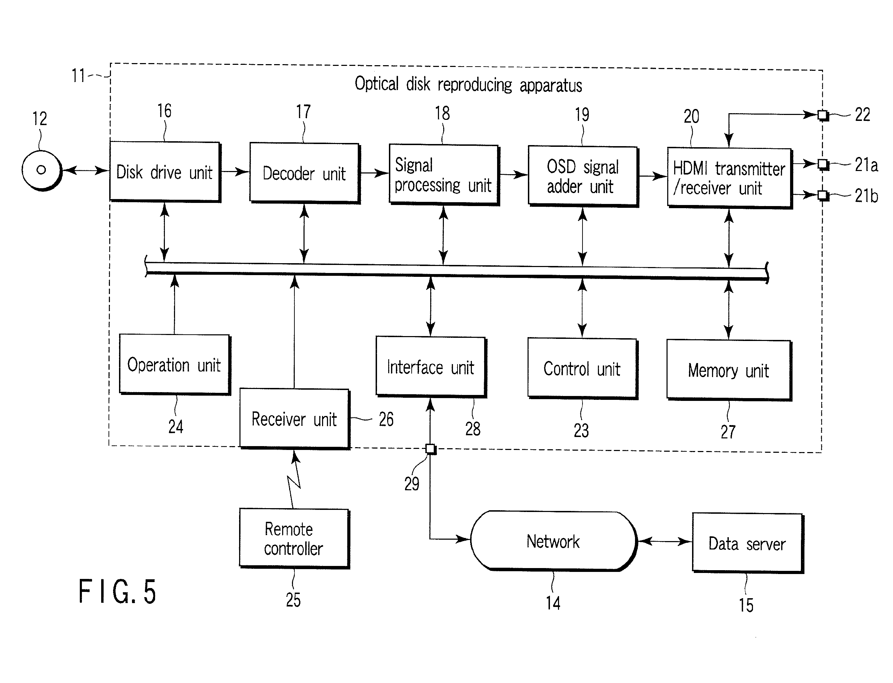

In addition, as shown in FIG. 5, in the case where the optical disk reproducing apparatus 11 has both an SD output terminal 21a which outputs SD-compliant video signals and an HD output terminal 21b which outputs HD-compliant video signals, the following system configuration could be considered.

First of all, a mode is set in which, in the case where the optical disk reproducing apparatus 11 reproduces HD-compliant video signals, OSD signals are outputted from the SD output terminal 21a and HD-compliant video signals are outputted from the HD output terminal 21b; and in the case where the optical disk reproducing apparatus 11 reproduces SD-compliant video signals, SD-compliant video signals are outputted from both the SD and HD output terminals 21a, 21b. Change-over to this mode is carried out on a setting screen based on the OSD display.

In addition, a mode is set in which, in the case where the optical disk reproducing apparatus 11 reproduces HD-compliant video signals, and SD-compliant video signals are outputted from the SD output terminal 21a and HD-compliant video signals are outputted from the HD output terminal 21b; and in the case where the optical disk reproducing apparatus 11 reproduces SD-compliant video signals, SD-compliant video signals are outputted from both the SD and HD output terminals 21a, 21b. Change-over to this mode is carried out on a setting screen based on the OSD display.

Furthermore, a mode is set in which, in the case where the optical disk reproducing apparatus 11 reproduces HD-compliant video signals, SD-compliant video signals are outputted from the SD output terminal 21a and HD-compliant video signals from the HD output terminal 21b; and in the case where the optical disk reproducing apparatus 11 reproduces SD-compliant video signals, SD-compliant video signals are outputted from both the SD and HD output terminals 21a, 21b. Change-over to this mode is carried out by operation of the remote controller 25.

In addition, a mode is set in which, in the case where the optical disk reproducing apparatus 11 reproduces HD-compliant video signals, SD-compliant video signals are outputted from the SD output terminal 21a and HD-compliant video signals from the HD output terminal 21b; and in the case where the optical disk reproducing apparatus 11 reproduces SD-compliant video signals, SD-compliant video signals are outputted from both the SD and HD output terminals 21a, 21b. Change-over to this mode is carried out by operation of the operation unit 24.

The present invention shall not be limited to the above-mentioned embodiment as it is, but in the working stage, the invention may be put into practice by making various changes and variations on component elements without departing from the spirit of the present invention. In addition, by suitably combining multiple component elements disclosed in the above-mentioned embodiments, various inventions can be also formed. For example, several constitutional elements may be eliminated from all the constitutional elements shown in the embodiments. Furthermore, constitutional elements related to different embodiments may be combined.

## Claims

1. A signal output apparatus **characterized by** comprising:
a reader unit (16) configured to read signals including images or voices from a mounted information recording medium (12);
a signal acquiring unit (28) configured to acquire signals including images or voices from a data server (15) on a network (14);
a specification acquiring unit (20) configured to acquire information (EDID data) indicating a reception specification of a connected receiving-side device (13) from the receiving-side device (13);
a control unit (23) configured to search and acquire signals including images or voices of a form that corresponds to the reception specification acquired by the specification acquiring unit (20) from either one of the information recording medium (12) and the data server (15); and
an output unit (20) configured to output the receiving-side device (13) by applying predetermined signal processing to signals acquired by the control unit (20).

2. The signal output apparatus according to claim 1, **characterized in that**
the control unit (23) is configured to search the signals including images or voices of a form that corresponds to the reception specification acquired by the specification acquiring unit (20) from the information recording medium (12), and to search the signals from the data server (15) in the case where and the signals are not recorded in the information recording medium (12).

3. The signal output apparatus according to claim 1, **characterized by** further comprising:
a display unit (13, 19, 23) configured to display to the fact that the signals including images or voices of a form that corresponds to the reception specification acquired by the specification acquiring unit (20) do not exist in any of the information recording medium (12) and the data server (15).

4. The signal output apparatus according to claim 1, **characterized in that**
the output unit (20) is configured to apply illegal copy prevention processing to the signals acquired by the control unit (23) and to output the processed signals to the receiving-side device (13).

5. The signal output apparatus according to claim 1, **characterized in that**
the output unit (20) is configured to output the signals obtained by the control unit (23) to the receiving-side device (13) in a form that conforms to the HDMI standard.

6. The signal output apparatus according to claim 1, **characterized in that**
the information indicating the reception specification of the receiving-side device (13) is EDID data.

7. A signal output method **characterized by** comprising:
a first step (S3, S4) of acquiring information (EDID data) indicating a reception specification of a connected receiving-side device (13) from the receiving-side device (13);
a second step (S5, S6, S9 to S11) of searching and acquiring signals including images or voices of a form that corresponds to the reception specification acquired in the first step (S3, S4) from either one of a mounted information recording medium (12) and a data server (15) on a network (14); and
a third step (S7) of applying predetermined signal processing to the signals acquired in the second step (S5, S6, S9 to S11) and outputting the signals to the receiving-side device (13).

8. The signal output method according to claim 7,
**characterized in that**
the second step (S5, S6, S9 to S11) comprises:
a step (S5, S6) of searching the signals including images or voices of a form that corresponds to the reception specification obtained in the first step (S3, S4) from the information recording medium (12); and
a step (S9 to S11) of searching the signals containing images or voices of a form that corresponds to the reception specification obtained in the first step (S3, S4) from the data server (15) in the case where the signals are not recorded in the information recording medium (12).

9. The signal output method according to claim 7, **characterized by** further comprising:
a fourth step (S12) of displaying the fact that the signals containing images or voices of a form that corresponds to the reception specification obtained in the first step (S3, S4) do not exist in either the information recording medium (12) or the data server (15).

10. The signal output method according to claim 7, **characterized in that**
the third step (S7) comprising applying illegal copy prevention processing to the signals obtained in the second step (S5, S6, S9 to S11) and outputting the signals to the receiving-side device (13).
